# EUROPÄISCHE PATENTSCHRIFT

(11) **EP 1 354 387 B1**
(45) Veröffentlichungstag und Bekanntmachung des Hinweises auf die Patenterteilung: **20.06.2007**
(21) Anmeldenummer: 02703501.3
(22) Anmeldetag: 22.01.2002
(51) Int. Cl.: H02J 1/00

(54) **ENERGIESYSTEM FÜR WASSERFAHRZEUGE**
ENERGY SYSTEM FOR WATERCRAFT
SYSTEME D'ENERGIE DE BATEAUX

(30) Priorität: 22.01.2001 DE 10102716
(43) Veröffentlichungstag der Anmeldung: 22.10.2003
(73) Patentinhaber: SIEMENS AKTIENGESELLSCHAFT, 80333 München (DE)
(72) Erfinder: RZADKI, Wolfgang, 21509 Glinde (DE)
(86) Internationale Anmeldenummer: PCT/DE2002/000195
(87) Internationale Veröffentlichungsnummer: WO 2002/058206

(56) Entgegenhaltungen:
- EP-A- 0 052 265
- EP-A- 0 536 876
- WO-A-97/15106
- DE-A- 19 739 917

## Beschreibung

Die vorliegende Erfindung betrifft ein Energiesystem für Wasserfahrzeuge, insbesondere für Schiffe, U-Boote und dergleichen.

Die bekannten Wasserfahrzeuge unterschiedlicher Art und Größe werden üblicherweise mit Festpropellern, Verstellpropellern, Ruderpropellern und mitunter auch von Wasserstrahlsystemen angetrieben. Dabei wird die mechanische Energie für den Antrieb direkt von Verbrennungsmotoren, beispielsweise Otto Motoren, Dieselmotoren mit Schwer- bzw. Leichtölbetrieb oder Gasturbinen, erzeugt. Als Energieträger werden hier jeweils fossile Brennstoffe eingesetzt, die in seitens des Wasserfahrzeugs mitgeführten Tanks gelagert werden.

Die Verbrennungsmotoren an Bord von Wasserfahrzeugen werden dabei nicht nur für den Antrieb, sondern auch zur Erzeugung elektrischer Energie für eine Vielzahl von elektrischen Verbrauchern an Bord von Wasserfahrzeugen eingesetzt, beispielsweise für Hilfsantriebe, die wiederum elektrische Energie in mechanische Energie umsetzen, elektrische Geräte zur Erzeugung von Wärme, Kälte und Licht, elektrische Geräte der Medientechnik und elektrische Geräte der Nautik. Dabei werden die Verbrennungsmotoren mit elektrischen Maschinen gekoppelt, die die von den Verbrennungsmotoren abgegebene mechanische Energie in elektrische Energie für die elektrischen Verbraucher umwandeln. Die Verbrennungsmotoren für den Antrieb der Wasserfahrzeuge erzeugen dabei mechanische Leistungen in einem Bereich von etwa 5 kW bis etwa 60 MW, die den Antriebsorganen der Wasserfahrzeuge zur Verfügung gestellt werden. Die Leistung der benötigten elektrischen Energie für elektrische Verbraucher beträgt je nach Typ und Größe des Wasserfahrzeugs bis zu etwa 15 MVA. Dabei werden in Abhängigkeit der benötigten elektrischen Energie mitunter mehrere, jeweils einen Verbrennungsmotor umfassende Bordnetzgeneratoren zur Erzeugung der elektrischen Energie eingesetzt.

Die elektrischen Verbrennungsmotoren die seitens der Wasserfahrzeuge für den Antrieb des Wasserfahrzeugs und zur Erzeugung elektrischer Energie zur Versorgung von elektrischen Verbrauchern über das elektrische Bordnetz eines Wasserfahrzeugs im Zusammenhang mit Bordnetzgeneratoren, weisen einige Nachteile auf. Die Verbrennungsmotoren erzeugen zum einen durch die Verbrennung fossiler Brennstoffe umweltbelastende Schadstoffemissionen und sind in der Regel im Betrieb äußerst geräuschintensiv, was insbesondere bei Marineschiffen von Nachteil ist, da diese so einfacher detektierbar sind. Darüber hinaus geht durch die in Tanks mitzuführenden fossilen Brennstoffe für die Verbrennungsmotoren Stauraum seitens des Wasserfahrzeugs verloren. Zusätzlich weisen die Verbrennungsmotoren durch die in Tanks gelagerten fossilen Brennstoffe sowie die Bordnetzgeneratoren ein erhöhtes Gewicht auf, welches mit dem Wasserfahrzeug bewegt werden muss.

Diese Nachteile sind besonders gravierend, bei Fahrten von Wasserfahrzeugen in Hafengebieten, beispielsweise im Rahmen der Einfahrt, der Ausfahrt bzw. dem Anlegen von Wasserfahrzeugen in einem Hafen, da durch die Wasserfahrzeuge das Hafengebiet konzentrierten Emissionsbelastungen ausgesetzt ist. Aus dem Artikel "Sicherheit auf allen Wegen" in etz, Heft 13-14/2000, ist es bekannt, zum Antrieb von Schiffen mittels Gleichstrom betriebener Motoren, diese mit Brennstoffzellen mit elektrischer Energie zu versorgen, wozu schiffsseitig ein Gleichstromnetzwerk eingerichtet ist.

Darüber hinaus offenbart die DE 197 39 917 A1 ein Gleichspannungsversorgungsnetz für Schiffe, bei dem mehrere Wechselspannungsgeneratoren über gesteuerte Gleichrichter derart in Parallelschaltung betrieben werden, dass diese gleichmäßig belastet werden. Zusätzlich können am Gleichspannungsversorgungsnetz angeschlossene Brennstoffzellen vorgesehen werden.

Der Erfindung liegt in Anbetracht dieses Standes der Technik die **Aufgabe** zugrunde, ein Energiesystem für Wasserfahrzeuge bereitzustellen, welches neben einer emissionslosen und weitestgehend geräuscharmen Energieversorgung, -übertragung und -umwandlung für einen Antrieb des Wasserfahrzeugs eine Versorgung elektrischer Einrichtungen seitens des Wasserfahrzeugs ermöglicht.

Die Aufgabe wird durch ein Energiesystem für ein Wasserfahrzeug gemäß Anspruch 1 gelöst.

Erfindungsgemäß wird für die Bereitstellung von Energie jedweder Art an Bord von Wasserfahrzeugen nur eine Form einer Energiequelle eingesetzt, vorliegend wenigstens ein Brennstoffzellenmodul, vorteilhafterweise bestehend aus mehreren miteinander verschalteten Brennstoffzellen. Brennstoffzellen ermöglichen die direkte Erzeugung elektrischer Energie aus Wasserstoff und Sauerstoff. Als Brennstoff wird Wasserstoff, als Oxidationsmittel wird Sauerstoff verwendet. Durch die chemische Reaktion entsteht eine elektrische Spannung und als Reaktionsprodukt wird Wasser ausgeschieden. Bei dieser Art der Erzeugung elektrischer Energie entstehen somit keinerlei umweltbelastende Schadstoffe. Erfindungsgemäß wird die so erzeugte elektrische Energie über ein Leitungsnetzwerk dem wenigstens einen elektrischen Antrieb zur Erzeugung eines Vortriebs des Wasserfahrzeugs sowie elektrischen Verbrauchern des Wasserfahrzeugs zugeführt. Dabei wird vorteilhafterweise ein erhöhter Wirkungsgrad erzielt. Darüber hinaus ermöglichen Brennstoffzellen die direkte Erzeugung elektrischer Energie aus Wasserstoff und Sauerstoff und zeichnen sich durch einen hohen elektrischen Wirkungsgrad, ein gutes Teillastverhalten und eine geringe Geräuschentwicklung aus.

Ein Brennstoffzellenmodul erzeugt eine Gleichspannung und kann unter Belastung eine bestimmte elektrische Leistung abgeben. Je nach Leistungsbedarf im Bordnetz des Wasserfahrzeugs sind vorteilhafterweise mehrere Brennstoffzellenmodule in einer Reihen- und/oder Parallelschaltung zu einer Brennstoffzellenanlage zusammengeschaltet.

Brennstoffzellen zeichnen sich durch einen hohen elektrischen Wirkungsgrad, ein gutes Teillastverhalten, niedrige Schadstoffemissionen sowie äußerst geringe Geräuschentwicklungen aus und sind daher sowohl für dezentrale als auch zentrale Anwendungen, wie sie für das erfindungsgemäße Energiesystem für Schiffe gegeben sind, geeignet.

Gemäß einer weiteren Ausgestaltung der Erfindung weist die Brennstoffzelle einen festen Elektrolyten auf, vorzugsweise aus Kunststoff. In einer besonders vorteilhaften Ausgestaltung der Erfindung ist der Elektrolyt eine polymere Membran. Dies hat den Vorteil, dass die Brennstoffzelle einen überaus einfachen Aufbau aufweist. Das eigentliche elektrochemische Element, in welchem die Energie umgewandelt wird, ist die Membran-Elektrodeneinheit. Sie besteht aus dem polymeren Elektrolyten, Gasdiffusionselektroden mit Platin als Katalysator und Kohlepapier auf beiden Seiten der Elektroden. Protonen wandern von der Anode zur Kathode, wo als Reaktionsprodukt Wasser entsteht. Von der bezogen auf den oberen Heizwert des Wasserstoffs theoretisch gegebenen Spannung von 1,48 V der H₂O₂-Brennstoffzelle stehen im unbelasteten Zustand etwas mehr als 1 V pro Brennstoffzelle zur Verfügung. Mit Hilfe einer Kühleinheit werden die Reaktanten gleichmäßig an die Elektroden herangeführt und Wärme von den Elektroden abgeführt. Produktwasser aus der Brennstoffzelle wird mit Hilfe eines geringen Sauerstoffstroms abgeführt, wobei die verschiedenen Medien gegeneinander abgedichtet werden. Die Brennstoffzelle mit einer polymeren Membran als Elektrolyten weist ein günstiges Ein- bzw. Ausschaltverhalten, ein günstiges Last- und Temperaturzyklusverhalten, geringe Spannungsdegradation, eine hohe Lebensdauer, ein günstiges Überlastverhalten, eine geringe Betriebstemperatur von etwa 80°C auf und zeichnet sich durch Fehlen eines flüssigen korrosiven Elektrolyten aus. Die Polymerelektrolytmembram-Brennstoffzelle (PEM-Brennstoffzelle) stellt somit einen nahezu idealen Stromerzeuger dar. Besonders günstig ist ein Betrieb mit Wasserstoff, der in elektrisch oder physikalisch gebundener Form mitgeführt und in einem Wasserstofferzeugungsgerät freigesetzt werden kann. Dabei ist die Energiedichte um Zehnerpotenzen höher als bei dem Mitführern in Wasserstoffbehältern, z.B. Dauerflaschen.

Gemäß einer weiteren vorteilhaften Ausgestaltung der Erfindung ist die Brennstoffzelle mit dem Reaktionsgas aus einem Reformer, insbesondere Diesel-, Methanol-, Leichtbenzin- und/oder Erdgas-Reformer, und mit Luft betreibbar. Beim Betrieb mit Luft enthält die Sauerstoffseite der Brennstoffzelle etwa 21 % Sauerstoff. Beim Betrieb mit in dem Reaktionsgas aus einem Reformer, dem sogenannten Reformergas, enthält die Wasserstoffseite der Brennstoffzelle Beimischungen von Stickstoff oder Kohlendioxid. Daraus folgt, daß die PEM-Brennstoffzellen sowohl auf der Sauerstoffseite als auch auf der Wasserstoffseite nicht mehr "DEAD-ENDED" ausgeführt werden. Die Brennstoffzellenmodule werden vorteilhafter Weise für einen Überschussbetrieb ausgelegt. Die Verunreinigungen werden sowohl auf der Sauerstoffseite als auch auf der Wasserstoffseite niedrig gehalten. Dabei muss vermieden werden, dass beispielsweise Anteile von Kohlenmonoxid, Schwefelverbindungen oder Natriumchlorid beigemischt werden. Seeluft wird daher ein- oder zweifach gefiltert, wobei bei einer Zweifachfilterung ein Filter ein Aktivfilter ist.

Gegenüber einem Diesel-Reformer arbeiten Methanol-, Leichtbenzin- und/oder Erdgas-Reformer mit geringeren Temperaturen und haben weniger Schwierigkeiten, das flüssige Medium, beispielsweise Methanol, Leichtbenzin oder Flüssiggas, in einen Wasserstoffstrom umzuwandeln. Für Marinezwecke sind Diesel-Reformer besonders geeignet, aber auch Leichtbenzin-Reformer, da Dieselkraftstoff und gereinigtes Leichtbenzin eine hohe Verfügbarkeit besitzen.

Der Betrieb einer PEM-Brennstoffzelle mit einem Diesel-Reformer ist für das erfindungsgemäße Energiesystem von Schiffen besonders vorteilhaft, insbesondere für Kampfschiffe. Zum einen ist damit eine sichere Schadstoff und geräuscharme Stromversorgung des Energiesystems gegeben. Dieselkraftstoff ist weltweit verfügbar, so dass es keiner besonderes Logistik bedarf. Darüber hinaus ist Dieselkraftstoff für Marineschiffe ein bei der NATO standardisierter Kraftstoff. Auf den Schiffen muss keine zusätzliche Tankkapazität für neue zusätzliche Betriebsstoffe bereitgestellt werden.

Gemäß einer besonders vorteilhaften Ausgestaltung der Erfindung ist die Brennstoffzelle eine direkte Methanol-Brennstoffzelle (DMFC). In einer weiteren besonders vorteilhaften Ausgestaltung der Erfindung ist die Brennstoffzelle eine keramische Hochtemperaturbrennstoffzelle (SOFC). Die Betriebstemperatur einer SOFC-Brennstoffzelle beträgt etwa 950 bis 1000° C. Da eine nachträgliche Wärmenutzung erfolgt, ist nicht nur der Wirkungsgrad von SOFC-Brennstoffzellen besonders hoch, beispielsweise > 60%, sondern auch der Heißluftaustritt aus dem Reformer erfolgt bei etwa 300° C. Dieser Heißluftstrom kann ohne weiteres in das Wasser eingeleitet werden. Die Verwendung von SOFC-Brennstoffzellen in Kombination mit Flüssiggas-Reformern eignet sich besonders vorteilhaft für den Antrieb von zivileingesetzten Schiffen.

Vorteilhafterweise werden Abgase, insbesondere Reformegase und Absorbergase, seitens des Energiesystems direkt ins Fahrwasser eingeführt, besonders bevorzugt ins Schraubenwasser eines Ruderpropellerantriebs oder in den Volumenraum eines Wasserstrahlantriebs eingeblasen. Dadurch kann das Wasserfahrzeug auch nicht mehr anhand seiner Abgase und deren Wärmestrahlung detektiert werden, was ansonsten beispielsweise mittels Infrarotstrahlung und dergleichen möglich ist. Kleinere Abgasmengen sind dabei mittels Infrarotdetektoren nicht nachweisbar. Zur Vermeidung jedweder Wärmesignatur ist der Reformer vorzugsweise mit einer Wärmeabschirmung versehen, vorzugsweise mittels Spülgaseinrichtungen zur Kühlung mit Spülgas, welches außerbords des Wasserfahrzeugs zum Kühlen durchs Wasser geführt wird.

Vorteilhafterweise umfasst das Leitungsnetzwerk ein Gleichspannungsversorgungsnetz, über welches die seitens der Brennstoffzellenmodule erzeugte elektrische Energie zu den einzelnen elektrischen Verbrauchern bzw. Verbrauchergruppen transportiert und dort bei Bedarf in die an dem jeweiligen Einsatzort benötigte Energieform umgewandelt wird. Vorteilhafterweise wird die seitens der Brennstoffzellenmodule erzeugte Gleichspannung für den elektrischen Antrieb für den Vortrieb des Wasserfahrzeugs über wenigstens eine Wechselrichtereinheit in einen Wechselstrom mit variabler Spannung und/oder variabler Frequenz umgeformt. Der elektrische Antrieb des Wasserfahrzeugs wandelt die ihm zugeführte elektrische Energie dann in mechanische Energie um und stellt diese an seiner Welle dem Wasserfahrzeugantrieb zur Verfügung.

In einer weiteren vorteilhaften Ausgestaltung der Erfindung sind drehzahlveränderbare Drehstrommotoren für Hilfsmaschinen wie Kühlwasserpumpen, Klimaanlagenkompressoren und dergleichen, über steuerbare Wechselrichtereinheiten mit elektrischer Energie gespeist. Wechselstromverbraucher, wie Heizungsanlagen, Kühlanlagen und Beleuchtungsanlagen sind vorteilhafterweise über Wechselrichtereinheiten mit konstanter Spannung und Frequenz mit elektrischer Energie versorgt. In einer weiteren vorteilhaften Ausgestaltung der Erfindung werden zur Versorgung von Verbrauchern mit konstanter Spannung und Frequenz Umformersätze, vorteilhafterweise bestehend aus einem Gleichstrommotor und einem Drehstrom-Synchrongenerator oder einer Wechselrichtereinheit bzw. einem Drehstrommotor und einem Drehstrom-Synchrongenerator, verwendet.

Gemäß einer besonders vorteilhaften Ausgestaltung der Erfindung weist das Energiesystem wenigstens ein Brennstoffzellenmodul für eine Notstrom- bzw. Bordstromerzeugung auf, die vorteilhafterweise bei einem Betrieb des Wasserfahrzeugs in einem Hafengebiet Verwendung findet.

Weitere Einzelheiten, Merkmale und Vorteile der Erfindung werden nachfolgend anhand der in den Figuren dargestellten Ausführungsbeispiele näher erläutert. Dabei zeigen:
- Figur 1: den prinzipiellen Aufbau eines erfindungsgemäßen Energiesystems für Wasserfahrzeuge anhand eines Einschraubenschiffs und
- Figur 2: den prinzipiellen Aufbau eines erfindungsgemäßen Energiesystems für Wasserfahrzeuge anhand eines Zweischraubenschiffs.

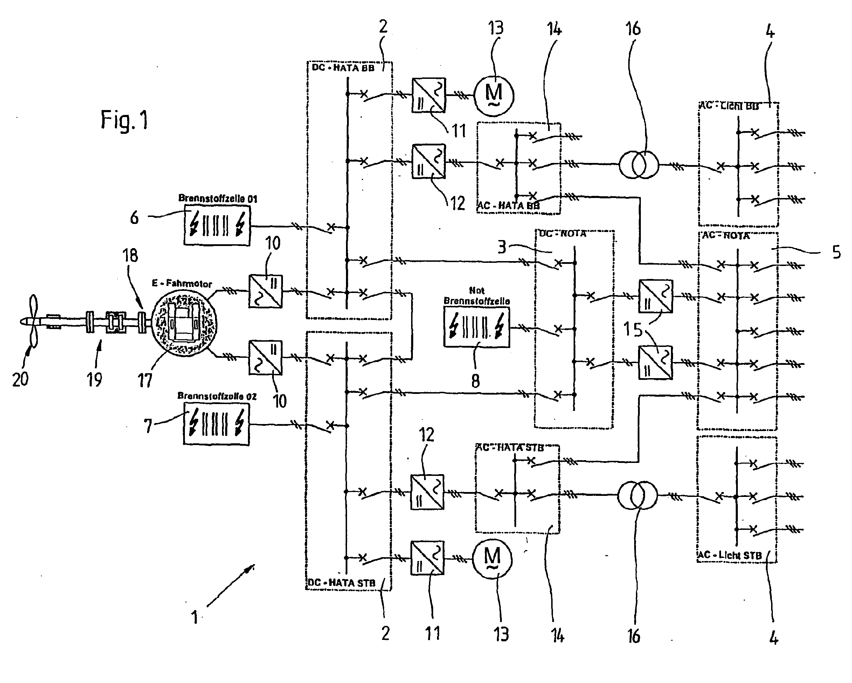

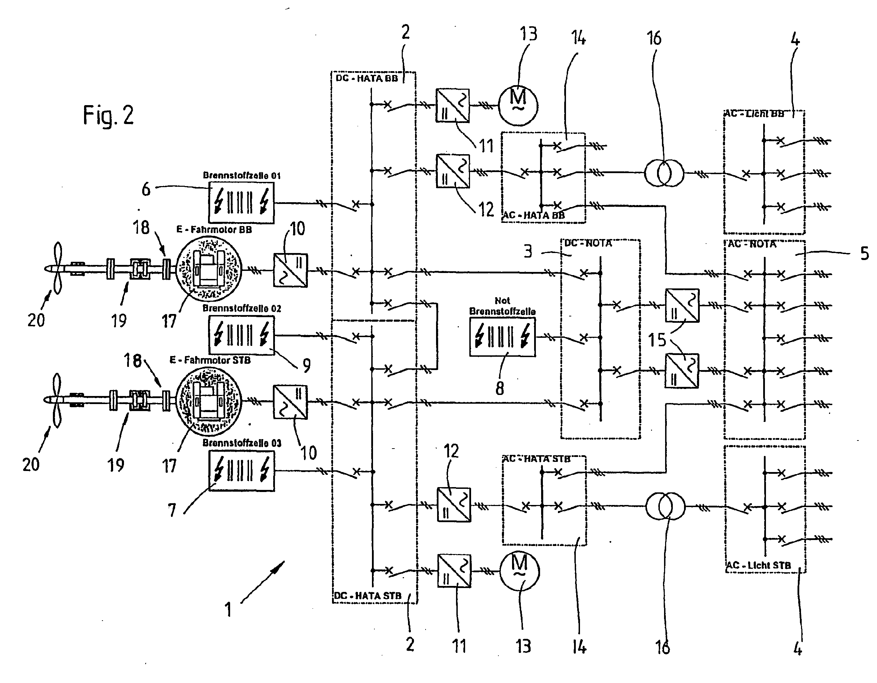

Figur 1 und 2 zeigen jeweils ein Ausführungsbeispiel eines Energiesystems 1 für Wasserfahrzeuge. Das Energiesystem 1 gemäß Figur 1 ist für ein Einschraubenschiff und weist dementsprechend einen elektrischen Antrieb 17 auf, welcher über eine Welle 18 mit Drucklager 19 einen Schiffspropeller 20 antreibt. Figur 2 zeigt ein Energiesystem 1 für ein Zweischraubenschiff, wobei back- und steuerbordseitig jeweils ein elektrischer Antrieb 17 vorgesehen ist, welcher jeweils über eine Welle 18 und mit Drucklager 19 einen Schiffspropeller 20 antreibt.

Die elektrischen Antriebe 17 gemäß Figur 1 und 2 sind über ein Dreiphasen-Drehstomnetzwerk und eine Wechselrichtereinheit 10 mit einem back- und steuerbordseitigen Gleichstromnetzwerk 2 verbunden, welche jeweils von wenigstens einem Brennstoffzellenmodul 6 und 7 bzw. 6, 7 und 9 mit elektrischer Energie versorgt werden. Die Gleichstromnetzwerke 2 weisen dabei mehrere Schaltelemente auf, welche seitens einer hier nicht explizit dargestellten Steuereinrichtung in Abhängigkeit der geforderten Leistung geschaltet werden, wobei je nach Leistungsbedarf die Brennstoffzellenmodule 6, 7 bzw. 9 in Reihen- und/oder Parallelschaltung zu einer Brennstoffzellenanlage zusammengeschaltet werden. Die in Gleichstromnetze 2 sind über Wechselrichtereinheiten 11 bzw. 12 mit Drehzahl veränderbaren Drehstrommotoren 13 für Hilfsmaschinen wie Kühlwasserpumpen, Klimaanlagen, Kompressoren und dergleichen bzw. mit Wechselstromnetzwerken 14 verbunden. Die Wechselrichtereinheiten 11 zur Speisung der Drehzahl veränderbaren Drehstrommotoren 13 sind dabei steuerbar ausgebildet. Über jeweils einen Umformer 16, vorliegend ein Transformator, ist das back- bzw. steuerbordseitige Wechselstromnetzwerk 14 mit weiteren back- bzw. steuerbordseitigen Wechselstromnetzwerken 4 sowie einem Wechselstromnetzwerk 5 für eine Notstromversorgung verbunden. Die Umformer 16 stellen dabei eine Versorgung von Verbrauchern mit konstanter Spannung und Frequenz bereit, welche seitens der Wechselstromnetzwerke 4 bzw. 5 anschließbar sind, beispielsweise Wechselstromverbraucher wie Heizungsanlagen, Kühlanlagen und Beleuchtungsanlagen.

Wie in den Figuren 1 und 2 dargestellt, umfasst das Energiesystem 1 zusätzlich ein Brennstoffzellenmodul 8, welches über ein Gleichstromnetzwerk 3 eine Notstromversorgung bereitstellt. Über das Gleichstromnetzwerk 3 ist das Brennstoffzellenmodul 8 einerseits mit den back- und steuerbordseitigen Gleichstromnetzwerken 2 und andererseits über Wechselrichtereinheiten 15 mit dem für eine Notstromversorgung von elektrischen Wechselstromverbrauchern vorgesehenen Wechselstromwerknetz 5 verbunden.

Je nach Leistungsbedarf werden die Gleichstromnetzwerke 2 und 3 bzw. die Wechselstromnetzwerke 4, 5 und 14 seitens der hier nicht explizit dargestellten Steuereinrichtung verschaltet. Die Verschaltung der Gleich- und Wechselstromnetzwerke ist dabei derart ausgelegt, dass bei Ausfall einzelner Brennstoffzellenmodule jederzeit eine Versorgung der elektrischen Antriebe 17 sowie der bordnetzseitigen elektrischen Verbraucher wie Drehstrommotoren für Hilfsmaschinen wie Kühlwasserpumpen, Klimaanlagen, Kompressoren und dergleichen sowie Heizungsanlagen, Kühlanlagen und Beleuchtungsanlagen gewährleistet ist.

Die in den Figuren dargestellten Ausführungsbeispiele dienen lediglich der Erläuterung der Erfindung und sind für diese nicht beschränkend.

## Patentansprüche

1. Energiesystem (1) für ein Wasserfahrzeug mit einer emissionslosen und weitestgehend geräuscharmen Antriebsausführung, wozu es
- zumindest ein elektrische Energie aus Brennstoff erzeugendes, mehrere miteinander verbundene Brennstoffzellen aufweisendes Brennstoffzellenmodul (6, 7, 8, 9), insbesondere ein H₂O₂-Brennstoffzellenmodul,
- ein mit dem Brennstoffzellenmodul (6, 7, 8, 9) elektrisch verbindbares Gleichstromnetzwerk (2),
- wenigstens einen über eine Wechselrichtereinheit (10) mit dem Gleichstromnetzwerk (2) verbindbaren Wechselstromantrieb (17) des Wasserfahrzeugs und
- über einen Umrichter (12, 15) mit dem Gleichstromnetzwerk (2) verbindbare Stromverbraucher aufweist,
**dadurch gekennzeichnet, dass**
- die Stromverbraucher Wechselstromverbraucher sind, die über ein Wechselstromnetzwerk (4, 5, 14) mit dem Umrichter (12, 15) verbindbar sind, wobei der Umrichter (12, 15) eine konstante Spannung und Frequenz erzeugt, und
- zum optimierten Einsatz der Brennstoffzellen in Bezug auf die Sicherheit der Stromversorgung und der Nichtdetektierbarkeit des Wasserfahrzeuges die Brennstoffzellen mit Reaktionsgas aus einem Diesel- oder Leichtbenzin-Reformer betreibbar sind, wobei die Reformergase ins Fahrwasser eingeleitet werden.

2. Energiesystem nach Anspruch 1, **dadurch gekennzeichnet, dass** die Wechselrichtereinheit (10) einen Wechselstrom mit variabler Spannung und/oder Frequenz erzeugt.

3. Energiesystem nach Anspruch 1 oder Anspruch 2, **dadurch gekennzeichnet, dass** die Wechselrichtereinheit (10) steuerbar ausgebildet ist.

4. Energiesystem nach einem der Ansprüche 1 bis 3, **dadurch gekennzeichnet, dass** in Abhängigkeit des Leistungsbedarfs mehrere Brennstoffzellenmodule (6,7,8,9) in Reihen- und/oder Parallelschaltung zu einer Brennstoffzellenanlage zusammenschaltbar sind.

5. Energiesystem nach einem der vorhergehenden Ansprüche, **dadurch gekennzeichnet, dass** über das Gleichstromnetz (2) mittels steuerbarer Wechselrichtereinheiten (11) Drehzahl veränderbare Drehstrommotoren (13) für Hilfsmaschinen speisbar sind.

6. Energiesystem nach einem der vorhergehenden Ansprüche, **dadurch gekennzeichnet, dass** dieses ein Brennstoffzellenmodul (8) zur Notstromversorgung aufweist, welches über ein Gleichstromnetzwerk (3) mit dem Gleichstromnetzwerk (2) und über dieses mittels einer Wechselrichtereinheit (10) mit dem elektrischen Antrieb (17) verbindbar ist.

7. Energiesystem nach einem der vorhergehenden Ansprüche, **dadurch gekennzeichnet, dass** dieses ein Brennstoffzellenmodul (8) zur Notstromversorgung aufweist, welches über ein Gleichstromnetzwerk (3) und eine Wechselrichtereinheit (15) mit einem Wechselstromnetzwerk (5) für Wechselstromverbraucher verbindbar ist.

8. Energiesystem nach Anspruch 1, **dadurch gekennzeichnet, dass** die Brennstoffzellen einen festen Elektrolyten aufweisen.

9. Energiesystem nach Anspruch 8, **dadurch gekennzeichnet, dass** der Elektrolyt aus Kunststoff ist, vorzugsweise eine polymere Membran ist.

10. Energiesystem nach einem der vorhergehenden Ansprüche, **dadurch gekennzeichnet, dass** die Brennstoffzelle mit Luft betreibbar ist.

11. Energiesystem nach einem der vorhergehenden Ansprüche, **dadurch gekennzeichnet, dass** die Abgase der Antriebe, insbesondere die Reformergase, in den Volumenraum eines Wasserstrahlantriebs und/oder in das Schraubenwasser eines Ruderpropellerantriebs eingeblasen werden.

12. Energiesystem nach einem der vorhergehenden Ansprüche, **dadurch gekennzeichnet, dass** die Brennstoffzelle eine direkte Methanol-Brennstoffzelle (DMFC) ist.

13. Energiesystem nach einem der vorhergehenden Ansprüche, **dadurch gekennzeichnet, dass** die Brennstoffzelle eine keramische Hochtemperaturbrennstoffzelle (SOFC) ist.

14. Energiesystem nach der Anspruch 1, **dadurch gekennzeichnet, dass** der Reformer wärmeisoliert ist und mit einem vorzugsweise außerhalb des Wasserfahrzeugs geführten Spülgas gekühlt wird.

15. Energiesystem nach einem der vorhergehenden Ansprüche, **dadurch gekennzeichnet, dass** mehrere Brennstoffzellenmodule im Wasserfahrzeug angeordnet sind.

## Claims

1. Power system (1) for a watercraft having a propulsion system embodiment which produces no emissions and is very largely low-noise, for which purpose it has
- at least one fuel cell module (6, 7, 8, 9), which produces electrical power from fuel and has two or more fuel cells which are connected to one another in particular an H₂O₂ fuel cell module,
- a DC network (2) which can be electrically connected to the fuel cell module (6, 7, 8, 9),
- at least one AC propulsion system (17) for the watercraft, which can be connected to the DC network (2) via an inverter unit (10), and
- electrical loads which can be connected to the DC network (2) via a converter (12, 15),
**characterized in that**
- the electrical loads are AC loads which can be connected via an AC network (4, 5, 14) to the converter (12, 15), with the converter (12, 15) producing a constant voltage and frequency, and
- the fuel cells can be operated with reaction gas from a diesel or light-function petrol reformer for optimized use of the fuel cells with respect to the reliability of the electrical power supply and the non-detectability of the watercraft, with the reformer gases being introduced into the water through which the watercraft is travelling.

2. Power system according to Claim 1, **characterized in that** the inverter unit (10) produces alternating current at a variable voltage and/or frequency.

3. Power system according to Claim 1 or Claim 2, **characterized in that** the inverter unit (10) is designed to be controllable.

4. Power system according to one of Claims 1 to 3,
**characterized in that** two or more fuel cell modules (6, 7, 8, 9) may be connected in series and/or in parallel to form a fuel cell system, depending on the power requirement.

5. Power system according to one of the preceding claims, **characterized in that** variable speed three-phase motors (13) for auxiliary machines can be fed via the DC network (2) by means of controllable inverter units (11).

6. Power system according to one of the preceding claims, **characterized in that** this power system has a fuel cell module (8) for the emergency power supply, which can be connected via a DC network (3) to the DC network (2) and, via this and by means of an inverter unit (10), to the electrical propulsion system (17).

7. Power system according to one of the preceding claims, **characterized in that** this power system has a fuel cell module (8) for the emergency power supply, which can be connected via a DC network (3) and an inverter unit (15) to an AC network (5) for AC loads.

8. Power system according to Claim 1, **characterized in that** the fuel cells have a solid electrolyte.

9. Power system according to Claim 8, **characterized in that** the electrolyte is formed from plastic, and is preferably a polymer membrane.

10. Power system according to one of the preceding claims, **characterized in that** the fuel cell can be operated with air.

11. Power system according to one of the preceding claims, **characterized in that** the exhaust gases from the propulsion systems, preferably the reformer gases, are blown into the volume space of a water jet propulsion system and/or into the propeller water of a steerable propeller propulsion system.

12. Power system according to one of the preceding claims, **characterized in that** the fuel cell is a direct methanol fuel cell (DMFC).

13. Power system according to one of the preceding claims, **characterized in that** the fuel cell is a ceramic high-temperature fuel cell (SOFC).

14. Power system according to Claim 1, **characterized in that** the reformer is thermally insulated and is cooled by a flushing gas which is preferably carried outside of the watercraft.

15. Power system according to one of the preceding claims, **characterized in that** two or more fuel cell modules are arranged in the watercraft.

## Revendications

1. Système d'énergie (1) pour un bateau ayant un modèle de propulsion sans émission et à très faible bruit, comportant à cet effet :
- au moins un module de piles à combustible (6, 7, 8, 9) produisant de l'énergie électrique à partir de combustible et comportant plusieurs piles à combustible reliées entre elles, notamment un module de piles à combustible H₂O₂,
- un réseau en courant continu (2) pouvant être relié électriquement au module de piles à combustible (6, 7, 8, 9),
- au moins une propulsion à courant alternatif (17) pouvant être reliée par l'intermédiaire d'un onduleur (10) au réseau en courant continu (2) du bateau, et
- des consommateurs de courant pouvant être reliés par l'intermédiaire d'un convertisseur (12, 15) au réseau en courant continu (2),
**caractérisé par le fait que**
- les consommateurs de courant sont des consommateurs de courant alternatif qui peuvent être reliés par l'intermédiaire d'un réseau en courant alternatif (4, 5, 14) au convertisseur (12, 15), le convertisseur (12, 15) produisant une tension et une fréquence constantes, et
- pour l'utilisation optimisée des piles à combustible par rapport à la sécurité de l'alimentation en courant et à la non-détectabilité du bateau, les piles à combustible peuvent fonctionner avec un gaz de réaction provenant d'un reformeur au diesel ou à l'essence légère, les gaz de reformeur étant envoyés dans l'eau navigable.

2. Système d'énergie selon la revendication 1, **caractérisé par le fait que** l'onduleur (10) produit un courant alternatif avec tension et/ou fréquence variable.

3. Système d'énergie selon la revendication 1 ou la revendication 2, **caractérisé par le fait que** l'onduleur (10) est conçu commandable.

4. Système d'énergie selon l'une des revendications 1 à 3, **caractérisé par le fait que**, en fonction de la puissance nécessaire, plusieurs modules de piles à combustible (6, 7, 8, 9) peuvent être branchés ensemble en série et/ou en parallèle pour former un système de pile à combustible.

5. Système d'énergie selon l'une des revendications précédentes, **caractérisé par le fait que** des moteurs triphasés (13) à vitesse variable pour machines auxiliaires peuvent être alimentés par l'intermédiaire du réseau en courant continu (2) au moyen d'onduleurs commandables (11).

6. Système d'énergie selon l'une des revendications précédentes, **caractérisé par le fait qu'**il comporte un module de piles à combustible (8) qui est destiné à l'alimentation en courant de secours et qui peut être relié par l'intermédiaire d'un réseau en courant continu (3) au réseau en courant continu (2) et par l'intermédiaire de celui-ci et au moyen d'un onduleur (10) à la propulsion électrique (17).

7. Système d'énergie selon l'une des revendications précédentes, **caractérisé par le fait qu'**il comporte un module de piles à combustible (8) qui est destiné à l'alimentation en courant de secours et qui peut être relié par l'intermédiaire d'un réseau en courant continu (3) et d'un onduleur (15) à un réseau en courant alternatif (5) pour des consommateurs de courant alternatif.

8. Système d'énergie selon la revendication 1, **caractérisé par le fait que** les piles à combustible ont un électrolyte solide.

9. Système d'énergie selon la revendication 8, **caractérisé par le fait que** l'électrolyte est en matière plastique, de préférence une membrane polymère.

10. Système d'énergie selon l'une des revendications précédentes, **caractérisé par** le fait la pile à combustible peut fonctionner avec de l'air.

11. Système d'énergie selon l'une des revendications précédentes, **caractérisé par le fait que** les gaz d'échappement des propulsions, notamment les gaz de reformeurs, sont insufflés dans l'espace volumique d'une propulsion par jet d'eau et/ou dans l'eau d'une propulsion par hélice de gouvernail actif.

12. Système d'énergie selon l'une des revendications précédentes, **caractérisé par le fait que** la pile à combustible est une pile à combustible à méthanol directe (DMFC).

13. Système d'énergie selon l'une des revendications précédentes, **caractérisé par le fait que** la pile à combustible est une pile à combustible céramique à haute température (SOFC).

14. Système d'énergie selon la revendication 1, **caractérisé par le fait que** le reformeur est calorifugé et qu'il est refroidi avec un gaz de balayage envoyé de préférence en dehors du bateau.

15. Système d'énergie selon l'une des revendications précédentes, **caractérisé par le fait que** plusieurs modules de piles à combustible sont placés dans le bateau.
